# FASCICULE DE BREVET EUROPEEN

(11) **EP 3 609 376 B1**
(45) Date de publication et mention de la délivrance du brevet: **08.11.2023**
(21) Numéro de dépôt: 18717373.7
(22) Date de dépôt: 13.04.2018
(51) Int. Cl.: A47J 43/27, B01F 21/00, B01F 31/55, B01F 33/25, B01F 35/75, B01F 33/501

(54) **SHAKER SOUPLE FACILEMENT TRANSPORTABLE ADAPTÉ POUR UN USAGE UNIQUE**
LEICHT TRANSPORTIERBARER FLEXIBLER SCHÜTTLER ZUM EINMALIGEN GEBRAUCH
EASILY TRANSPORTABLE FLEXIBLE SHAKER DESIGNED FOR SINGLE USE

(30) Priorité: 14.04.2017 FR 1770384
(43) Date de publication de la demande: 19.02.2020
(73) Titulaire: Dumont, Romain, 06000 Nice (FR)
(72) Inventeur: Dumont, Romain, 06000 Nice (FR)
(74) Mandataire: Decobert, Jean-Pascal
(86) Numéro de dépôt international: PCT/EP2018/059591
(87) Numéro de publication internationale: WO 2018/189392

(56) Documents cités:
- JP-A- 2002 128 102
- JP-A- 2003 191 971
- US-A- 2 682 355
- US-A- 5 628 404
- US-A1- 2006 051 491
- US-A1- 2014 376 834
- US-A1- 2016 038 893

## Description

### DOMAINE DE L'INVENTION

La présente invention concerne le domaine technique des récipients portatifs destinés à mélanger un aliment à base d'au moins un composant pulvérulent et d'au moins un composant liquide et concerne en particulier un shaker souple facilement transportable adapté à un usage unique.

### ARRIERE-PLAN TECHNOLOGIQUE

Certains sportifs et en particulier ceux qui désirent augmenter leur masse musculaire ont besoin d'un apport complémentaire de protéines en plus de celui que leur procure une alimentation courante équilibrée. Les suppléments en protéines sont généralement pris sous forme de boisson afin d'être rapidement digérés. Les protéines se présentent donc le plus souvent sous forme de poudre à mélanger à de l'eau. Afin de préparer le mélange, le sportif se sert d'un récipient hermétique et portatif de type shaker car c'est la façon la plus simple et la plus rapide d'obtenir un mélange homogène. En effet, si la poudre n'est pas convenablement dispersée dans l'eau il se forme facilement des grumeaux et les protéines sont moins bien assimilables. Selon le régime préconisé, la prise des protéines peut avoir lieu plusieurs fois dans la journée de sorte que l'utilisateur transporte avec lui son matériel pour effectuer sa boisson protéinée. De même, lorsqu'il s'agit de suivre un régime alimentaire spécifique tel qu'un régime végan, végétarien ou minceur, la consommation journalière peut aller jusqu'à 10 shakers.

Certains shakers sont munis d'un dispositif à l'intérieur qui facilite l'obtention d'un mélange homogène et donc qui augmente l'efficacité du shaker tel que par exemple le shaker du document US 2006/051491 ou le shaker du document US2016/038893. D'autres poches comprennent des dispositifs d'admission d'air par exemple le document JP2003191971 avec une valve-antiretour ou le document JP2002128102 avec une paille. Ce dispositif peut se présenter sous forme d'un agitateur de type balle mélangeuse creuse ou bien de billes pleines. Ces agitateurs se déplacent à l'intérieur du shaker et dans le mélange en même temps qu'on secoue. Le dispositif qui facilite le mélange peut se composer également d'une grille fixe rigide généralement située sous le couvercle. Pour plus d'hygiène, il existe également des shakers à usage unique mais dans ce cas l'utilisateur doit se munir dans la journée d'un nombre de shakers égal au nombre de fois qu'il doit prendre la boisson protéinée, ce qui augmente considérablement le volume du matériel à prévoir pour une journée. Pour pallier cet inconvénient, certains de ces shakers jetables sont empilables pour minimiser leur encombrement. Cependant, la taille de ces shakers reste trop importante notamment du fait de la présence des éléments permettant un mélange facilité (poudre avec son contenant, dosette, chiffons etc), pour qu'ils soient placés dans une poche de blouson par exemple pour un utilisateur qui ne dispose pas de sac. Ce qui représente un inconvénient non négligeable. Ainsi, les consommateurs de compléments alimentaires qui utilisent un shaker ne disposent pas à ce jour d'un moyen efficace pour consommer leur collation en dehors de leur foyer, que ce soit sur leur lieu de travail, à la salle de sport ou pour toutes autres activités extérieures. Ils sont ainsi contraints de préparer à l'avance et transporter le matériel nécessaire : contenant, protéine en poudre, doseur, shaker, chiffon, sac de transport,... ce qui s'avère être très encombrant, peu discret et pas pratique.

C'est pourquoi, le but de l'invention est de réaliser un shaker permettant de réduire tout ou partie de ces inconvénients.

### RESUME DE L'INVENTION

L'objet de l'invention est donc un shaker comprenant les caractéristiques de la revendication 1.

La caractéristique principale de l'invention consiste en ce que la poche est composé d'une matière flexible et souple configurée pour rendre le shaker pliable par enroulement sur lui-même selon la direction longitudinale et en ce que ledit shaker comprend une valve à clapet anti-retour permettant à de l'air de passer uniquement depuis l'extérieur de la poche vers l'intérieur de ladite poche afin d'augmenter et de maintenir une pression de l'air à l'intérieur de la poche plus élevée que la pression de l'air à l'extérieur de la poche.

Avantageusement, l'invention permet ainsi la création d'un shaker repliable en partie au moins sur lui-même selon la direction longitudinale permettant d'occuper un volume réduit. Ainsi, l'invention permet de réduire l'encombrement des shakers, il est possible pour l'utilisateur d'en emmener un grand nombre par rapport au shaker de l'art antérieur.

De plus, grâce à la présence d'une valve anti-retour, l'utilisateur peut faire varier la pression intérieure du shaker et notamment en l'augmentant facilement. Une fois le volume intérieur du shaker mis sous pression relative à l'air ambiant, il est plus facilement manipulable. De plus, la grille à l'intérieur de la poche est tendue entre les parois. Il s'en trouve une utilisation facilitée, et une capacité de mélanger le produit à l'intérieur plus importante. L'invention permet ainsi d'avoir un shaker utilisant un encombrement limité lors de son stockage avant et après utilisation, tout en permettant d'avoir, pendant l'utilisation, une structure suffisamment robuste pour permettre un mélange optimal.

L'invention concerne aussi un procédé d'utilisation d'utilisation par un utilisateur d'un shaker, dans lequel un shaker est pré rempli d'une dose de composant pulvérulent et comprenant les étapes suivantes :
- Ouverture d'un goulot ;
- Insertion d'un liquide au travers du goulot ;
- Fermeture du goulot ;
- Admission d'air au travers de la valve anti-retour de sorte à rigidifier la poche par l'augmentation de la pression à l'intérieur d'une poche par l'ajout d'un gaz au travers de la valve anti-retour et a tendre une grille entre les parois de ladite poche ;
- Agitation de la poche rigidifiée afin de mélanger convenablement la dose de composant pulvérulent et le liquide.

### BREVE INTRODUCTION DES FIGURES

Les buts, objets et caractéristiques de l'invention apparaîtront plus clairement à la lecture de la description qui suit faite en référence aux dessins qui ne sont pas à l'échelle dans lesquels :
- la figure 1 représente une vue de perspective et en transparence d'un shaker qui ne fait pas partie de l'invention,
- la figure 2 représente le shaker de la figure 1 en transparence et sa vanne en position de fermeture,
- la figure 3 représente le shaker de la figure 1 en transparence et sa vanne en position d'ouverture,
- la figure 4 représente une vue de côté du shaker vide, la figure 5 représente une vue de côté du shaker dans sa position repliée,
- la figure 6 représente une vue du shaker muni d'une seconde ouverture,
- la figure 7 représente une vue du shaker par transparence munie d'une seconde ouverture,
- la figure 8 représente le shaker sans vanne,
- la figure 9 représente un shaker selon l'invention sans vanne et avec valve,
- la figure 10 représente un autre mode de réalisation selon l'invention du shaker.

### DESCRIPTION DETAILLEE

Avant d'entrer dans le détail de formes préférées de réalisation de l'invention en référence aux dessins notamment, d'autres caractéristiques optionnelles de l'invention, qui peuvent être mise en oeuvre de façon combinée selon toutes combinaisons ou de manière alternative dans le cadre de la portée des revendications, sont indiquées ci-après :
- la valve 90 à clapet anti-retour comprend une forme de paille dont l'une des extrémités est à l'intérieur de la poche 12 et l'autre extrémité est configurée pour être accessible par l'utilisateur à l'extérieur de la poche 12,
- la valve 90 est à positionné sur le shaker à proximité du goulot 20,
- la valve 90 à clapet anti-retour est distincte du goulot 20,
- ladite poche est composée de deux feuilles de matière souple soudées ensemble sur leurs bords latéraux et inférieurs 14, 54 et formant les parois latérales avant 13, 53 et arrière 15, 55 de ladite poche 12, lesdites feuilles de matière souple étant retenues par leurs bords supérieurs audit goulot 20 de manière à former un volume étanche d'une capacité comprise entre 100 millilitres et 1 litre,
- les feuilles de matière souples de ladite poche 12 sont en matière plastique étanche,
- le shaker comprend une vanne 30 comprenant une partie mâle 32 mobile entre deux positions, une partie femelle 34 qui se prolonge vers l'extérieur de ladite poche 12 par ledit goulot 20 et vers l'intérieur de ladite poche 12 par une sortie 36, ladite partie mâle 32 variant entre une position de fermeture dans laquelle les faxes extérieures de ladite partie mâle réalisent un blocage étanche entre ladite ouverture 16 et ladite sortie 36 à tout passage d'air ou de mélange de composants et une position d'ouverture dans laquelle ladite partie mâle 32 permet le passage d'air ou de mélange de composants entre ladite sortie 36 et ladite ouverture 16 au moyen d'une portion de communication 38,
- le goulot 20 est composé de deux manchons 66, 76 qui coopèrent ensemble et lesdites feuilles de matière souple sont retenues par leurs bords supérieurs audit goulot 20 par enserrement entre lesdits manchons 66 et 76 de façon à ce que ladite poche 12 soit amovible et puisse être remplacée par une autre poche facilement pour un usage unique,
- l'une de ses parois latérales une ouverture 18 est munie d'une fermeture à glissière 2 étanche, ladite fermeture à glissière comprenant deux bandes 24 et 26 souples profilées présentant des nervures et des rainures complémentaires s'engageant par déformation élastique les unes dans les autres sous l'action d'un curseur 28 constitué par une plaquette coulissant d'un extrémité à l'autre de ladite ouverture 18 le long desdites deux bandes 24 et 26,
- pour mélanger de façon optimum et homogène lesdits composants le shaker peut aussi comporter une ou plusieurs billes 44 dont le diamètre est supérieur au diamètre desdits trous 42 et dudit goulot 20,
- le shaker comprend un bouton pression composé d'une partie mâle 17 et d'une partie femelle 19 destinées à coopérer ensemble et à se maintenir ensemble, de façon à maintenir la poche dudit shaker pliée par enroulement autour dudit goulot 20,
- le goulot 20 est adapté pour recevoir un dispositif d'obturation 11, 80,
- la poche 12 est pré rempli d'une dose de composant pulvérulent au moment de la fabrication du shaker,
- l'épaisseur de la matière flexible et souple composant la poche 12 est inférieure à 1 millimètre (mm) et de préférence inférieure à 0.5 mm et de préférence inférieur à 0.25 mm.
- le shaker (10, 100) est plié préalablement à son utilisation, et dans lequel une étape de dépliage avant l'ouverture du goulot est réalisée.
- à la suite de l'agitation de la poche (12) rigidifiée afin de mélanger convenablement la dose de composant pulvérulent et le liquide les étapes suivantes sont réalisées :
   - on peut procéder à une ouverture du goulot (20) pour réduire la pression interne de la poche (12) ;
   - et réaliser une consommation par l'utilisateur du mélange.

Pour la bonne compréhension de la présente invention, on entend par enroulement le fait qu'une portion au moins de la poche du shaker puisse se replier sur elle-même. Le pliage peut se faire soit selon une direction curviligne, soit par tronçon. Dans cette hypothèse, le shaker se replie sur lui-même jusqu'à 4 fois.

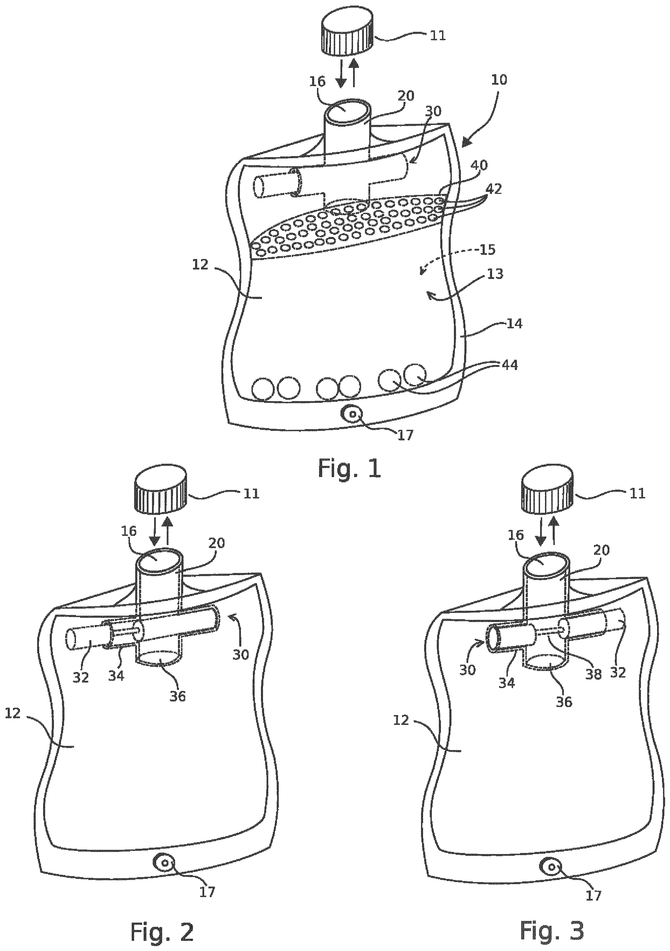

Selon la figure 1, le shaker 10 comprend principalement une poche souple 12 et un goulot 20 rigide délimitant une première ouverture 16 du shaker communiquant avec l'intérieur de la poche. L'ouverture 16 sert principalement pour l'absorption par la bouche du contenu de la poche par un utilisateur et peut servir aussi pour remplir la poche. Le goulot 20 a un diamètre de préférence égal à 21 mm et dispose ou pas d'un dispositif d'obturation 11. Le dispositif d'obturation 11 est un bouchon à clipser par emboitement élastique ou bien est muni d'un filetage intérieur de façon à coopérer avec un filetage situé sur l'extérieur du goulot 20.

Pour éviter sa perte, le dispositif d'obturation peut être relié au goulot par une pâte ou un lien flexible. La poche souple 12 est faite à partir d'une matière souple et flexible sous forme de feuille, de faible épaisseur et étanche de type matière plastique ou à partir d'un autre type de matière sous forme de feuilles possédant ces propriétés. La matière utilisée peut aussi être semi-rigide sans sortir du cadre de l'invention. Selon la figure 1, la poche en plastique 12 est composée de deux feuilles de matière plastique formant les parois latérales avant 13 et arrière 15 de la poche. Les feuilles de matière plastique sont soudées ou collées entre elles sur leurs bords latéraux et inférieurs 14 et retenues au goulot 20 par leurs bords supérieurs de façon à former un volume étanche d'une capacité comprise entre 100 ml et un litre selon la taille du modèle de shaker désiré. Les feuilles de matière plastique sont retenues au goulot 20 par collage ou soudage ou par tout autre moyen. La poche 12 pourrait être composée de plus de deux feuilles de matière souple soudées ou collées entre elles, par exemple pour former un fond, sans sortir du cadre de l'invention. La forme des feuilles est rectangulaire ou sensiblement rectangulaire comme représentée sur les figures avec une légère courbure sur les bords longs opposés afin de faciliter la prise en main du shaker lorsque celui-ci est secoué. La forme de la poche souple 12 pourrait être différente sans que cela sorte du cadre de l'invention. Le plastique utilisé pour la poche est de préférence un plastique alimentaire. La poche est destinée à recevoir un mélange formé à partir d'au moins un composant liquide et d'au moins un composant pulvérulent de type poudre de protéines, poudre alimentaire de régimes végan, minceur, diététique ou autre. Le liquide peut être de l'eau, du lait ou autre.

Le shaker contient un dispositif pour mélanger de façon optimum et homogène les composants du mélange. Selon cet exemple, ce dispositif est par exemple une grille 40 située à l'intérieur de la poche et munie de trous 42 de façon à ce que lorsque le shaker est secoué, le passage du mélange de liquide et de poudre à travers les trous de la grille réduit petit à petit les grumeaux éventuels jusqu'à les faire disparaître. La grille est de préférence située entre la paroi latérale avant 13 et la paroi latérale arrière 15 de la poche et est faite de préférence à partir de la même matière que les parois de la poche. La grille est donc souple et flexible. Le shaker peut contenir un second dispositif pour mélanger de façon optimum et homogène les composants du mélange sous forme d'une ou plusieurs billes 44 qui jouent le rôle d'agitateurs en se déplaçant avec le mélange à l'intérieur de la poche lorsque le shaker est secoué. Dans le mode de réalisation comprenant une grille 40 et une ou plusieurs billes 44, le diamètre des billes 44 est de préférence supérieur au diamètre des trous 42 de la grille 40 et supérieur au diamètre du goulot 20 afin de ne pas passer au travers et de ne pas risquer de sortir du shaker par l'ouverture 16.

Préférablement, le shaker comprend également une vanne 30 située dans la poche 12 du shaker et décrite plus en détail en référence aux figures 2 et 3. La vanne 30 comprend une partie mâle 32 mobile entre deux positions et une partie femelle 34 qui se prolonge vers l'extérieur de la poche par le goulot 20 et vers l'intérieur de la poche par une sortie 36. La partie mâle varie entre une position de fermeture représentée sur la figure 2 rendant hermétique le shaker 10 et une position d'ouverture représentée sur la figure 3 permettant le passage du mélange de composants ou d'air par la première ouverture 16 de l'extérieur vers l'intérieur de la poche ou inversement. Dans chacune des positions une portion de la partie mâle 32 est à l'extérieur de la partie femelle 34 de sorte que l'utilisateur presse sur cette portion à travers les parois de la poche pour faire passer la partie mâle de l'une à l'autre position. En position de fermeture représentée sur la figure 2, les faces extérieures de la partie mâle réalisent un blocage étanche entre l'ouverture

16 et la sortie 36 à tout passage du mélange de composants ou d'air.

En position d'ouverture représentée sur la figure 3, la partie mâle permet le passage du mélange de composants ou d'air entre l'ouverture 16 et la sortie 36 au moyen d'une portion de communication 38.

Lorsque le shaker contient la dose de protéines et de liquide nécessaires l'utilisateur s'assure que la vanne 30 est en position d'ouverture et souffle alors dans le goulot
20 pour faire entrer de l'air dans le shaker par l'ouverture 16 de façon à gonfler la poche au maximum et comprimer l'air emprisonné dedans. En étant ainsi gonflée, la poche se durcit et facilite la prise en main du shaker. L'utilisateur referme alors le shaker de façon étanche en actionnant la partie mâle 32 de la vanne 30 dans sa position de fermeture rapidement et tout en maintenant la pression d'air en continuant à souffler dans le goulot pour ne pas que de l'air s'échappe par l'ouverture 16. L'utilisateur peut ainsi secouer son shaker afin de préparer son mélange. L'avantage de ce système de vanne est qu'il propose un moyen rapide de fermer la poche de façon étanche tout en maintenant la pression d'air constante à l'intérieur de la poche. En gonflant au maximum la poche en soufflant de l'air par l'ouverture 16, les deux parois latérales 13 et 15 s'écartent et la grille se tend et se durcit et permet ainsi un meilleur mélange.

Une fois le mélange fait, l'utilisateur peut alors actionner la partie mâle 32 de la vanne 30 dans sa position d'ouverture et boire l'intérieur de la poche par l'ouverture 16.

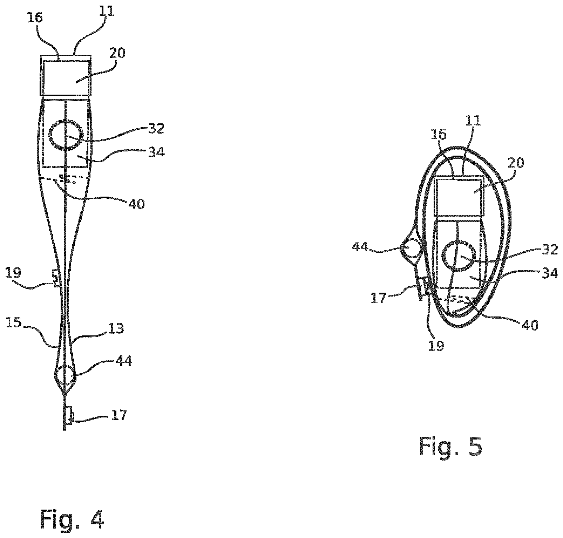

Le shaker comprend un bouton pression composé de deux parties, une partie mâle 17 et une partie femelle 19 destinée à coopérer ensemble. La partie mâle 17 est placée de préférence sur le bord inférieur de la paroi latérale avant 13 de la poche comme on peut le voir sur les figures 1, 2 et 3. Sur les figures 4 et 5 représentant le shaker 10 vide vu de côté, la partie femelle 19 est placée sur la paroi latérale arrière 15 de la poche 12 sachant que la position de la partie femelle est adaptée à la taille du shaker pour que, lorsque le shaker est plié par enroulement sur lui-même autour du goulot 20, les parties mâle 17 et femelle 19 se font face. De cette façon, le shaker présente un encombrement réduit et est maintenu dans cette position grâce à la coopération et au maintien ensemble par déformation élastique des deux parties mâle 17 et femelle 19 du bouton pression. Ceci est illustré sur la figure 5.

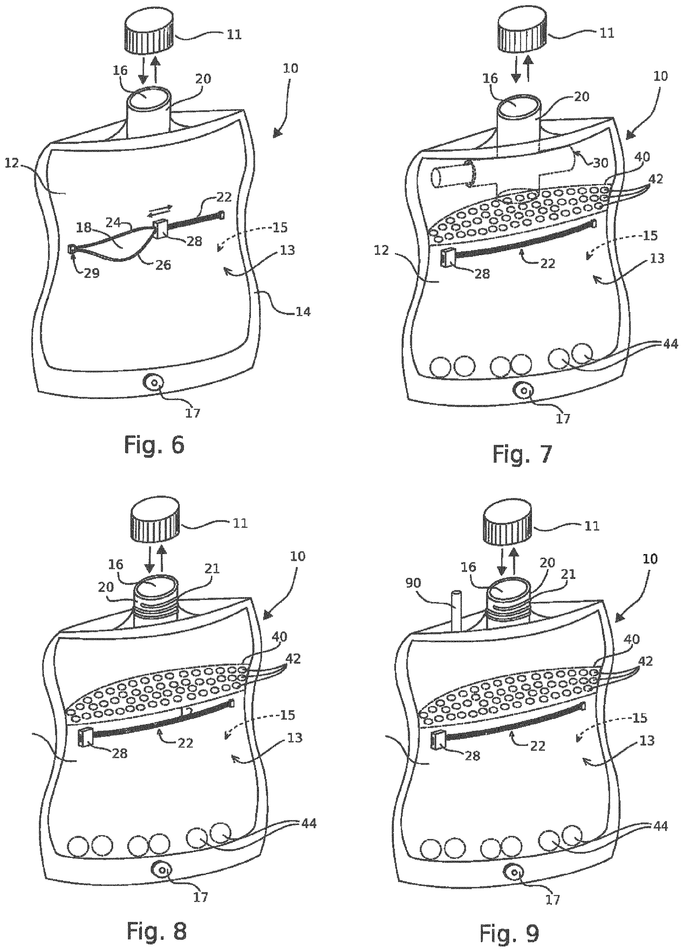

Selon un autre mode de réalisation représenté par les figures 6 et 7, le shaker 10 comprend une seconde ouverture
18 située sur la paroi latérale 13 de la poche et sous forme d'une fente. La seconde ouverture 18 est munie d'une fermeture à glissière 22 qui lorsqu'elle est ouverte permet le remplissage de la poche. La fermeture à glissière comprend deux bandes 24 et 26 souples profilées présentant des nervures et des rainures complémentaires s'engageant par déformation élastique les unes dans les autres sous l'action d'un curseur 28 constitué par une plaquette coulissant d'une extrémité à l'autre le long des deux bandes. Lorsque les deux bandes souples sont engagées l'une dans l'autre par déplacement du curseur 28 jusqu'à leur extrémité 27, la seconde ouverture 18 est fermée hermétiquement, ce qui rend la fermeture à glissière étanche. Pour plus de sureté, le curseur 28 est muni d'un moyen pour le retenir fermé tel qu'une encoche dans laquelle une protubérance 29 coopère lorsque le curseur est à l'extrémité 27 correspondant à la position fermée de la glissière comme on peut le voir sur la figure 6. La seconde ouverture 18 est suffisamment large pour permettre à l'utilisateur d'introduire facilement dans le shaker la dose désirée du composant pulvérulent tel que de la poudre de protéines. Une fois la fermeture à glissière 22 totalement refermée hermétiquement, l'utilisateur peut remplir la poche de la quantité de liquide nécessaire par la première ouverture 16. L'utilisateur peut également introduire le liquide dans la poche par la seconde ouverture 18.

L'ouverture 18 munie de sa fermeture à glissière 22 peut être associée à la vanne 30, à la grille 40 et aux billes 44 comme on peut le voir sur le shaker 10 représenté par la figure 7.

Le shaker 10 représenté sur la figure 8 ne comprend pas la vanne 30 mais il comprend un goulot 20 et une ouverture 16 communiquant directement dans la poche 12. Il comprend également une ouverture 18 munie de sa fermeture à glissière 22, de la grille 40 et des billes 44 et il est muni d'un dispositif d'obturation 11 de l'ouverture 16. Le dispositif d'obturation est par exemple un bouchon qui vient se visser sur un filetage 21 situé sur la face externe du goulot. Le shaker 10 selon l'invention ne comprend pas la vanne et est représenté sur la figure 9. D'après cette figure, la poche 12 comprend une valve 90 avec clapet anti-retour qui permet à l'air de passer de l'extérieur vers l'intérieur de la poche 12 mais qui bloque son passage de l'intérieur vers l'extérieur de la poche. Lorsque la poche 12 du shaker 10 contient la dose de composant pulvérulent tel que de la poudre de protéines et de liquide nécessaires l'utilisateur souffle alors dans le shaker par la valve 90 de façon à gonfler la poche au maximum et comprimer l'air emprisonné dedans. Ainsi, la pression à l'intérieur de la poche 12 est supérieure à la pression à l'extérieur de la poche. L'avantage de ce système de valve est qu'il propose un moyen rapide et automatique de fermer la poche de façon étanche tout en maintenant la pression d'air constante à l'intérieur de la poche. En étant ainsi gonflée, la poche 12 se durcit par l'air comprimé à l'intérieur et facilite la prise en main du shaker. De plus, à l'intérieur de la poche la grille soudée sur les parois latérales se tend.

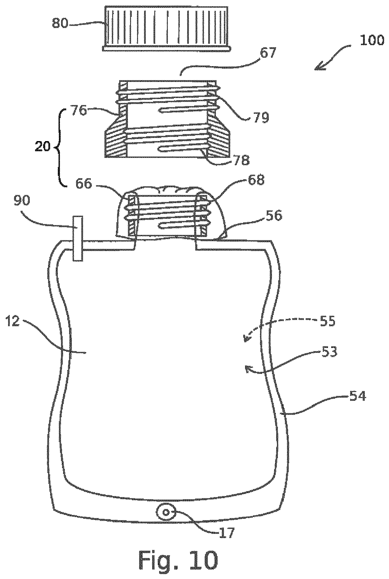

Selon un autre mode de réalisation qui ne fait pas partie de l'invention, la poche est retenue sur le goulot du shaker sans être collé ni soudée dessus de façon à pouvoir être amovible et être remplacée par une autre poche facilement. Ainsi seule la poche est à usage unique. Ce mode de réalisation est représenté par la figure 10 par un shaker 100. Le shaker 100 comprend une poche souple et flexible 12 délimitant un volume étanche et une partie rigide formant un goulot 20 en communication avec l'intérieur de la poche par une première ouverture 67 et munie d'un dispositif d'obturation sous forme d'un bouchon 80. Le goulot 20 est composé de deux manchons 66 et 76 qui coopèrent ensemble. La poche 12 est faite à partir d'une matière souple et flexible sous forme de feuille, de faible épaisseur et étanche, de type matière plastique ou d'un autre type de matière sous forme de feuille répondant à ces propriétés. La matière utilisée peut aussi être semi-rigide dans cet exemple. Selon la figure 10, la poche 12 est composée de deux feuilles de matière plastique formant les parois latérales avant 53 et arrière 55 de la poche. Les feuilles de matière plastique sont soudées ou collées entre elles sur leurs bords latéraux et inférieurs 54 et retenues au goulot 20 par leurs bords supérieurs 56 de façon à former un volume étanche d'une capacité comprise entre 100 ml et un litre selon la taille du modèle de shaker désiré. Les feuilles de matière plastique sont retenues au goulot 20 par enserrement entre deux manchons 66 et 76 que l'utilisateur solidarise ensemble ou désolidarise à la main. La poche 12 pourrait être composée de plus de deux feuilles de matière souple soudées ou collées entre elles, par exemple pour former un fond, sans sortir du cadre de l'invention.

Les bords supérieurs 56 de la poche viennent au contact de l'intérieur du premier manchon 66 comportant un filetage 68 sur sa face externe. Les bords supérieurs sont rabattus sur la face externe du manchon 66 de façon à recouvrir son filetage. Le second manchon 76 comprend une partie inférieure avec un premier filetage 78 sur sa face interne adapté pour coopérer avec le filetage du premier manchon et un second filetage 79 sur sa face externe sur lequel peut se visser un bouchon 80. Lorsque le second manchon 76 est vissé sur le premier manchon, il vient enserrer la poche 12 de façon étanche à la manière d'un sachet à usage unique pour biberon.

Selon un autre mode de réalisation selon l'invention, le shaker 100 comprend également la grille 40 et les billes 42 tels qu'ils sont décrits plus haut en référence aux figures précédentes. La poche 12 comprend une valve 90 avec clapet anti-retour qui permet à l'air de passer de l'extérieur vers l'intérieur de la poche 12 mais qui bloque son passage de l'intérieur vers l'extérieur de la poche. De préférence, la valve 90 comprend une forme de paille dont l'une des extrémités est à l'intérieur de la poche 12 et l'autre extrémité est configurée pour être accessible par l'utilisateur à l'extérieur de la poche 12. Avantageusement, la valve 90 est positionnée sur une extrémité de la poche 12 et de préférence à proximité du goulot 20. Lorsque la poche 12 du shaker 100 contient la dose de composant pulvérulent tel que de la poudre de protéines et de liquide nécessaires l'utilisateur souffle alors dans le shaker par la valve 90 de façon à gonfler la poche au maximum et comprimer l'air emprisonné dedans. L'avantage de ce système de valve est qu'il propose un moyen rapide et automatique de fermer la poche de façon étanche tout en maintenant la pression d'air constante à l'intérieur de la poche. En étant ainsi gonflée, la poche 12 se durcit par l'air comprimé à l'intérieur et facilite la prise en main du shaker. De plus, à l'intérieur de la poche la grille soudée sur les parois latérales se tend. L'utilisateur peut ainsi secouer son shaker afin de préparer son mélange. Le shaker 100 peut également comprendre un bouton pression tel que décrit pour le premier mode de réalisation pour permettre le maintien de la position pliée par enroulement du shaker sur lui-même autour du goulot 20.

Le shaker 100 selon le second mode de réalisation présente l'avantage également d'être peu encombrant. Les poches 12 à usage unique peuvent se présenter sous forme d'un rouleau attaché ou pas les unes aux autres et détachables facilement. La partie rigide que forment le goulot composé des manchons 66, 76 et le bouchon 80 étant réutilisable.

Le shaker selon tous les modes de réalisation de l'invention peut-être pré-rempli d'une dose déterminée du composant pulvérulent au moment de sa fabrication ou bien l'utilisateur peut le pré-remplir lui-même, ce qui n'empêche pas l'utilisateur d'enrouler le shaker sur lui-même afin de réduire son encombrement. L'utilisateur n'aura plus qu'à remplir le shaker de la dose de liquide nécessaire pour finir de préparer son mélange à boire ce qui facilite davantage son utilisation. Le shaker selon l'invention est adapté à d'autres préparations telles que des repas végétariens ou des compléments alimentaires divers. Cependant, le shaker peut être fabriqué sans être pré- remplie de la dose déterminée d'un composant pulvérulent.

Le shaker selon l'invention se présente sous forme d'une poche souple et flexible, d'un encombrement réduit lorsqu'il est vide ou lorsqu'il contient seulement le composant pulvérulent, ce qui le rend pliable par enroulement sur lui-même, facilement transportable et adapté à un usage unique.

## Revendications

1. Shaker (10, 100) comprenant :
- une poche (12) destinée à recevoir au moins un composant liquide et au moins un composant pulvérulent,
- au moins un dispositif pour mélanger lesdits composants,
- un goulot (20) positionné à l'une des extrémités du shaker (10, 100) et permettant à un utilisateur de boire le contenu de la poche ou de la remplir,
- une direction longitudinale de la poche s'étendant depuis le goulot (20) vers une extrémité distale dudit goulot;
ladite poche étant en une matière flexible et souple configurée pour rendre le shaker pliable par enroulement sur lui-même selon la direction longitudinale ledit shaker étant **caractérisé en ce qu'**il comprend une valve (90) à clapet anti-retour permettant à de l'air de passer uniquement depuis l'extérieur de la poche (12) vers l'intérieur de ladite poche (12) afin de maintenir une pression de l'air à l'intérieur de la poche (12) plus élevée que la pression de l'air à l'extérieur de la poche (12) lors d'une admission d'air par la valve anti-retour (90) dans la poche (12), et **en ce que** ledit dispositif pour mélanger lesdits composants est une grille (40) munie de trous (42) faite à partir de la même matière que ladite poche, ladite grille (40) est soudée sur les parois latérales intérieure de la poche et est configurée pour être tendue entre les parois de la poche (12) après admission de l'air dans ladite poche (12).

2. Shaker selon la revendication précédente dans lequel la valve (90) à clapet anti-retour comprend une forme de paille dont l'une des extrémités est à l'intérieur de la poche (12) et l'autre extrémité est configurée pour être accessible par l'utilisateur à l'extérieur de la poche (12).

3. Shaker selon l'une quelconque des revendications précédentes dans lequel la valve (90) à clapet anti-retour est distincte du goulot (20).

4. Shaker selon l'une quelconque des revendications précédentes, dans lequel ladite poche comprend deux feuilles de matière souple soudées ensemble sur leurs bords latéraux et inférieurs (14, 54) et formant les parois latérales avant (13, 53) et arrière (15, 55) de ladite poche (12), lesdites feuilles de matière souple étant retenue par leurs bords supérieurs audit goulot (20) de manière à former un volume étanche d'une capacité comprise entre 100 millilitres et 1 litre.

5. Shaker selon la revendication précédente dans lequel lesdites feuilles de matière souples de ladite poche (12) sont en matière plastique étanche.

6. Shaker selon l'une quelconque des revendications précédentes, dans lequel le shaker comprend une vanne (30) comprenant une partie mâle (32) mobile entre deux positions, une partie femelle (34) qui se prolonge vers l'extérieur de ladite poche (12) par ledit goulot (20) et vers l'intérieur de ladite poche (12) par une sortie (36), ladite partie mâle (32) variant entre une position de fermeture dans laquelle les faxes extérieures de ladite partie mâle réalisent un blocage étanche entre ladite ouverture (16) et ladite sortie (36) à tout passage d'air ou de mélange de composants et une position d'ouverture dans laquelle ladite partie mâle (32) permet le passage d'air ou de mélange de composants entre ladite sortie (36) et ladite ouverture (16) au moyen d'une portion de communication (38).

7. Shaker selon la revendication 4 ou 5, dans lequel ledit goulot (20) comprend deux manchons (66, 76) qui coopèrent ensemble et lesdites feuilles de matière souple sont retenues par leurs bords supérieurs audit goulot (20) par enserrement entre lesdits manchons (66 et 76) de façon à ce que ladite poche (12) soit amovible et puisse être remplacée par une autre poche facilement pour un usage unique.

8. Shaker selon l'une des revendications précédentes comprenant sur l'une de ses parois latérales une ouverture (18) munie d'une fermeture à glissière (22) étanche, ladite fermeture à glissière comprenant deux bandes (24 et 26) souples profilées présentant des nervures et des rainures complémentaires s'engageant par déformation élastique les unes dans les autres sous l'action d'un curseur (28) constitué par une plaquette coulissant d'une extrémité à l'autre de ladite ouverture (18) le long desdites deux bandes (24 et 26).

9. Shaker selon l'une des revendications précédentes, dans lequel ledit dispositif pour mélanger lesdits composants comprend d'une ou plusieurs billes (44) dont le diamètre est supérieur au diamètre desdits trous (42) et dudit goulot (20).

10. Shaker selon l'une de revendications précédentes, comprenant un bouton pression comprenant d'une partie mâle (17) et d'une partie femelle (19) destinées à coopérer ensemble et à se maintenir ensemble, de façon à maintenir la poche dudit shaker pliée par enroulement autour dudit goulot (20).

11. Shaker selon l'une des revendications précédentes dans lequel ledit goulot (20) comprend un dispositif d'obturation (11, 80).

12. Shaker selon l'une des revendications précédentes dans lequel ladite poche (12) est pré rempli d'une dose de composant pulvérulent au moment de la fabrication du shaker.

13. Procédé d'utilisation par un utilisateur d'un shaker selon l'une quelconque des revendications précédentes, dans lequel un shaker (10, 100) est pré rempli d'une dose de composant pulvérulent et comprenant les étapes suivantes :
- Ouverture d'un goulot (20) ;
- Insertion d'un liquide au travers du goulot (20) ;
- Fermeture du goulot (20) ;
- Admission d'air au travers de la valve anti-retour (90) de sorte à rigidifier la poche par l'augmentation de la pression à l'intérieur d'une poche (12) par l'ajout d'un gaz au travers de la valve anti-retour (90) et a tendre une grille (40) entre les parois de ladite poche (12)
- Agitation de la poche (12) rigidifiée afin de mélanger convenablement la dose de composant pulvérulent et le liquide.

14. Procédé selon la revendication précédente dans lequel, le shaker (10, 100) est plié préalablement à son utilisation, et dans lequel une étape de dépliage avant l'ouverture du goulot est réalisée.

15. Procédé selon l'une des deux revendications précédentes comprenant à la suite de l'étape d'agitation de la poche (12) rigidifiée afin de mélanger convenablement la dose de composant pulvérulent et le liquide les étapes suivantes sont réalisées :
- Ouverture du goulot (20) pour réduire la pression interne de la poche (12) ;
- Consommation par l'utilisateur du mélange.

## Patentansprüche

1. Schüttler (10, 100), umfassend:
- einen Beutel (12), der dazu bestimmt ist, mindestens eine flüssige Komponente und eine pulverförmige Komponente aufzunehmen,
- mindestens eine Vorrichtung zum Mischen der Komponenten,
- einen Hals (20), der an einem der Enden des Schüttlers (10, 100) positioniert ist, und es einem Nutzer ermöglicht, den Inhalt des Beutels zu trinken, oder diesen zu füllen,
- wobei sich eine Längsrichtung des Beutels von dem Hals (20) zu einem distalen Ende des Halses erstreckt;
wobei der Beutel aus einem flexiblen und biegsamen Material ist, das konfiguriert ist, um den Schüttler durch Zusammenrollen um sich selbst in der Längsrichtung zusammenlegbar zu machen, wobei der Schüttler **dadurch gekennzeichnet ist, dass** er ein Rückschlagventil (90) umfasst, das es möglich macht, dass Luft nur von außerhalb des Beutels (12) ins Innere des Beutels (12) gelangt, um bei einem Einlass von Luft durch das Rückschlagventil (90) hindurch in den Beutel (12) einen Druck der Luft im Inneren des Beutels (12) höher zu halten, als den Druck der Luft außerhalb des Beutels (12),
und dadurch, dass die Vorrichtung zum Mischen der Komponenten ein mit Löchern (42) versehenes Gitter (40) ist, das aus demselben Material wie der Beutel gefertigt ist, wobei das Gitter (40) an die inneren Seitenwände des Beutels geschweißt ist, und konfiguriert ist, um nach Einlass der Luft in den Beutel (12) zwischen den Wänden des Beutels (12) gespannt zu werden.

2. Schüttler nach dem vorstehenden Anspruch, wobei das Rückschlagventil (90) eine Form eines Strohhalms umfasst, von dem eines der Enden im Inneren des Beutels (12) ist, und das andere Ende konfiguriert ist, um durch den Nutzer außerhalb des Beutels (12) zugänglich zu sein.

3. Schüttler nach einem der vorstehenden Ansprüche, wobei sich das Rückschlagventil (90) von dem Hals (20) unterscheidet.

4. Schüttler nach einem der vorstehenden Ansprüche, wobei der Beutel zwei Folien aus flexiblem Material umfasst, die an ihren seitlichen und unteren Rändern (14, 54) zusammengeschweißt sind, und die vorderen (13, 53) und hinteren (15, 55) Seitenwände des Beutels (12) bilden, wobei die Folien aus flexiblem Material durch ihre oberen Ränder derart am Hals (20) gehalten werden, um ein dichtes Volumen mit einem Fassungsvermögen zu bilden, die zwischen 100 Millilitern und 1 Liter liegt.

5. Schüttler nach dem vorstehenden Anspruch, wobei die Folien aus flexiblem Material des Beutels (12) aus dichtem Kunststoffmaterial sind.

6. Schüttler nach einem der vorstehenden Ansprüche, wobei der Schüttler ein Ventil (30) umfasst, das einen zwischen zwei Positionen beweglichen Steckteil (32), einen Aufnahmeteil (34), der sich durch den Hals (20) hindurch nach außerhalb des Beutels (12), und durch einen Ausgang (36) nach innerhalb des Beutels (12) fortsetzt, wobei der Steckteil (32) zwischen einer Schließposition, in der die Außenachsen des Steckteils eine dichte Blockierung zwischen der Öffnung (16) und dem Ausgang (36) für jeden Durchlass von Luft oder eines Komponentengemisches ausführen, und einer Öffnungsposition variiert, in der der Steckteil (32) den Durchlass von Luft oder eines Komponentengemisches zwischen dem Ausgang (36) und der Öffnung (16) anhand eines Kommunikationsabschnitts (38) ermöglicht.

7. Schüttler nach Anspruch 4 oder 5, wobei der Hals (20) zwei Stutzen (66, 76) umfasst, die gemeinsam zusammenwirken, und die Folien aus flexiblem Material durch ihre oberen Ränder am Hals (20) durch Einspannen derart zwischen den Stutzen (66 und 76) gehalten werden, damit der Beutel (12) abnehmbar ist, und zur Einwegnutzung einfach durch einen anderen Beutel ersetzt werden kann.

8. Schüttler nach einem der vorstehenden Ansprüche, welcher auf der einen seiner Seitenwände eine Öffnung (18) umfasst, die mit einem dichten Reißverschluss (22) versehen ist, wobei der Reißverschluss zwei profilierte flexible Bänder (24 und 26) umfasst, die ergänzende Rippen und Nuten aufweisen, die durch elastische Verformung durch die Wirkung eines Schiebers (28), der durch ein Plättchen gebildet wird, das von einer Seite zur anderen der Öffnung (18) entlang der beiden Bänder (24 und 26) gleitet, ineinander eingreifen.

9. Schüttler nach einem der vorstehenden Ansprüche, wobei die Vorrichtung zum Mischen der Komponenten eine oder mehrere Kugeln (44) umfasst, deren Durchmesser größer als der Durchmesser der Löcher (42) und des Halses (20) ist.

10. Schüttler nach einem der vorstehenden Ansprüche, welcher einen Druckknopf umfasst, der einen Steckteil (17) und einen Aufnahmeteil (19) umfasst, die dazu bestimmt sind, gemeinsam zusammenzuwirken, und zusammenzuhalten, um den durch Zusammenrollen um den Hals (20) herum zusammengelegten Beutel des Schüttlers zu halten.

11. Schüttler nach einem der vorstehenden Ansprüche, wobei der Hals (20) eine Verschlussvorrichtung (11, 80) umfasst.

12. Schüttler nach einem der vorstehenden Ansprüche, wobei der Beutel (12) mit einer Dosis einer pulverförmigen Komponente zum Zeitpunkt der Herstellung des Schüttlers vorgefüllt wird.

13. Verfahren zur Verwendung durch einen Nutzer eines Schüttlers nach einem der vorstehenden Ansprüche, wobei ein Schüttler (10, 100) mit einer Dosis einer pulverförmigen Komponente vorgefüllt ist, und die folgenden Schritte umfassend:
- Öffnen eines Halses (20);
- Einbringen einer Flüssigkeit durch den Hals (20) hindurch;
- Schließen des Halses (20);
- Einlassen von Luft durch das Rückschlagventil (90) hindurch, um den Beutel durch Erhöhen des Drucks im Inneren eines Beutels (12) durch Beigeben eines Gases durch das Rückschlagventil (90) hindurch zu versteifen, und ein Gitter (40) zwischen den Wänden des Beutels (12) zu spannen
- Schütteln des versteiften Beutels (12), um die Dosis einer pulverförmigen Komponente und die Flüssigkeit angemessen zu mischen.

14. Verfahren nach dem vorstehenden Anspruch, wobei der Schüttler (10, 100) vor seiner Nutzung zusammengelegt ist, und wobei vor dem Öffnen des Halses ein Schritt zum Auseinanderfalten durchgeführt wird.

15. Verfahren nach einem der vorstehenden Ansprüche, welches nach dem Schritt des Schüttelns des versteiften Beutels (12) zum angemessenen Mischen der Dosis einer pulverförmigen Komponente und der Flüssigkeit die folgenden Schritte umfasst:
- Öffnen des Halses (20) zum Verringern des Innendrucks des Beutels (12);
- Konsumieren des Gemisches durch den Nutzer.

## Claims

1. A shaker (10, 100) comprising:
- a pocket (12) for receiving at least one liquid component and at least one powdery component,
- at least one device for mixing said components,
- a neck (20) arranged at one of the ends of the shaker (10, 100) and allowing a user to drink the contents of the pocket or to fill it,
- a longitudinal direction of the pocket extending from the neck (20) to a distal end of said neck;
said pocket being made of a versatile and flexible material configured to make the shaker foldable by winding on itself in the longitudinal direction said shaker being **characterised in that** it comprises a non-return valve (90) allowing air to pass only from the outside of the pocket (12) to the inside of said pocket (12) in order to maintain an air pressure inside the pocket (12) higher than the air pressure outside the pocket (12) during admission of air into the pocket (12) via the non-return valve (90), and **in that** said device for mixing said components is a grid (40) provided with holes (42) made from the same material as said pocket, said grid (40) is welded to the inner side walls of the pocket and is configured to be stretched between the walls of the pocket (12) after admission of the air into said pocket (12).

2. The shaker according to the preceding claim wherein the non-return valve (90) comprises a straw shape, one of the ends of which is inside the pocket (12) and the other end is configured to be accessible by the user outside the pocket (12).

3. The shaker according to any one of the preceding claims wherein the non-return valve (90) is separate from the neck (20).

4. The shaker according to any one of the preceding claims, wherein said pocket comprises two flexible material sheets welded together on their side and lower edges (14, 54) and forming the front (13, 53) and rear (15, 55) side walls of said pocket (12), said flexible material sheets being retained by their upper edges at said neck (20) so as to form a sealed volume with a capacity comprised between 100 millilitres and 1 litre.

5. The shaker according to the preceding claim wherein said flexible material sheets of said pocket (12) are made of watertight plastic material.

6. The shaker according to any one of the preceding claims, wherein the shaker comprises a valve (30) comprising a male part (32) movable between two positions, a female part (34) which extends to the outside of said pocket (12) through said neck (20) and to the inside of said pocket (12) through an outlet (36), said male part (32) varying between a closed position wherein the exterior faxes of said male part achieve a sealed blocking between said opening (16) and said outlet (36) to any passage of air or mixture of components and an open position wherein said male part (32) allows the passage of air or mixture of components between said outlet (36) and said opening (16) by means of a communication portion (38).

7. The shaker according to claim 4 or 5, wherein said neck (20) comprises two sleeves (66, 76) which cooperate together and said flexible material sheets are retained by their upper edges to said neck (20) by clamping between said sleeves (66 and 76) so that said pocket (12) is removable and can easily be replaced by another pocket for a single use.

8. The shaker according to one of the preceding claims comprising on one of its side walls an opening (18) provided with a sealed zipper (22), said zipper comprising two flexible profiled strips (24 and 26) having complementary ribs and grooves engaging by elastic deformation into each other under the action of a slider (28) constituted by a plate sliding from one end to the other of said opening (18) along said two strips (24 and 26) .

9. The shaker according to one of the preceding claims, wherein said device for mixing said components comprises one or more balls (44) whose diameter is greater than the diameter of said holes (42) and said neck (20).

10. The shaker according to one of the preceding claims, comprising a snap button comprising a male part (17) and a female part (19) intended to cooperate together and to hold together, so as to maintain the pocket of said shaker folded by winding around said neck (20).

11. The shaker according to one of the preceding claims wherein said neck (20) comprises a closing device (11, 80).

12. The shaker according to one of the preceding claims wherein said pocket (12) is pre-filled with a dose of powdery component at the time of manufacture of the shaker.

13. A method for using a shaker by a user according to any one of the preceding claims, wherein a shaker (10, 100) is pre-filled with a dose of powdery component and comprising the following steps:
- Opening of a neck (20);
- Insertion of a liquid through the neck (20);
- Closing of the neck (20);
- Admission of air via the non-return valve (90) so as to stiffen the pocket by increasing the pressure inside a pocket (12) by adding a gas via the non-return valve (90) and stretching a grid (40) between the walls of said pocket (12)
- Agitation of the stiffened bag (12) in order to properly mix the dose of powdery component and the liquid.

14. The method according to the preceding claim wherein the shaker (10, 100) is folded prior to its use, and wherein an unfolding step before opening the neck is carried out.

15. The method according to one of the two preceding claims comprising after the step of agitation of the stiffened bag (12) in order to properly mix the dose of powdery component and the liquid, the following steps are carried out:
- Opening of the neck (20) to reduce the internal pressure of the pocket (12);
- Consumption of the mixture by the user.
